# EUROPÄISCHE PATENTANMELDUNG

(11) **EP 4 083 719 A1**
(43) Veröffentlichungstag der Anmeldung: **02.11.2022**
(21) Anmeldenummer: 21171673.3
(22) Anmeldetag: 30.04.2021
(51) Int. Cl.: G05B 17/02

(54) **GENERIEREN EINES COMPUTERGESTÜTZTEN SIMULATIONSMODELLS FÜR EINE AUTOMATISIERUNGSANLAGE**

(71) Anmelder: Siemens Aktiengesellschaft, 80333 München (DE)
(72) Erfinder: Botero Halblaub, Andrés, 85614 Kirchseeon (DE); Geipel, Markus Michael, 80799 München (DE); Wehrstedt, Jan Christoph, 81829 München (DE)

(57) **Zusammenfassung**

Die Erfindung betrifft ein computerimplementiertes Verfahren und eine Vorrichtung zum Generieren eines computergestützten Simulationsmodells für eine Automatisierungsanlage, mit den Verfahrensschritten:
- Einlesen (S1) von Simulationskomponenten, die jeweils dazu eingerichtet sind, Bearbeitungsschritte, die von mindestens einer Maschine der Automatisierungsanlage ausführbar sind, computergestützt zu simulieren,
- Erfassen (S2) von jeweiligen, von mindestens einer Maschine der Automatisierungsanlage umsetzbaren Bearbeitungsschritten und deren zeitliche und logische Bearbeitungsabfolge zur Realisierung einer vorgegebenen Automatisierungsaufgabe,
- Generieren (S3) einer Datenstruktur (BT), in der Simulationskomponenten, die den Bearbeitungsschritten zur Realisierung der vorgegebenen Automatisierungsaufgabe entsprechen, gemäß der zeitlichen und logischen Bearbeitungsabfolge als Elemente in einer Baumstruktur gespeichert und miteinander verknüpft werden,
- Generieren (S4) des computergestützten Simulationsmodells (SM) durch Umsetzung der Datenstruktur (BT) in eine ausführbare Datenstruktur,
und
- Ausgeben (S5) des computergestützte Simulationsmodells (SM) für die Automatisierungsanlage.

## Beschreibung

Die Erfindung betrifft ein computerimplementiertes Verfahren und eine Vorrichtung zum Generieren eines computergestützten Simulationsmodells für eine Automatisierungsanlage, z.B. für eine virtuelle Inbetriebnahme und/oder zur Steuerung der Automatisierungsanlage, sowie ein Computerprogrammprodukt zum Durchführen der Schritte des Verfahrens.

Eine virtuelle Inbetriebnahme und/oder Steuerung von komplexen, technischen Anlagen kann anhand modellbasierter Computersimulationen durchgeführt werden. Allerdings ist das Erstellen und die Konfiguration einer solchen Computersimulation, die die technische Anlage möglichst genau abbildet, mit bekannten Simulationstools zeitaufwendig und oft nicht trivial und erfordert daher ein hohes Maß an technischem Wissen eines Simulationsingenieurs. Individuell erstellte Simulationsmodelle sind außerdem oft fehleranfälliger und schlechter reproduzierbar und können zusätzlich auch die Wartungsfreundlichkeit erschweren.

Computergestützte Simulationen können als digitales Planungsinstrument für technische Systeme, wie z.B. Automatisierungs- oder Fabrikanlagen, genutzt werden. Mittels computergestützter Simulationen können beispielsweise Planungsentwürfe des technischen Systems validiert werden. Außerdem können computergestützte Simulationen für eine virtuelle Inbetriebnahme eines technischen Systems genutzt werden. Des Weiteren können computergestützte Simulationen während der Betriebsphase einer Anlage eingesetzt werden, um beispielsweise betriebsgleitende Assistenzsysteme zu realisieren, um damit die Anlage zu steuern. Für diese Arten von computergestützten Simulationen sind Simulationswerkzeuge oder Simulationstools bekannt, mit denen Simulationsmodelle aus bestehenden Simulationskomponenten-Bibliotheken manuell von einem Simulationsexperten erstellt werden können.

Es ist daher eine Aufgabe der Erfindung, das Generieren eines computergestützten Simulationsmodells für eine technische Anlage zu erleichtern.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein computerimplementiertes Verfahren zum Generieren eines computergestützten Simulationsmodells für eine Automatisierungsanlage, mit den Verfahrensschritten:
- Einlesen von Simulationskomponenten, die jeweils dazu eingerichtet sind, Bearbeitungsschritte, die von mindestens einer Maschine der Automatisierungsanlage ausführbar sind, computergestützt zu simulieren,
- Erfassen von jeweiligen, von mindestens einer Maschine der Automatisierungsanlage umsetzbaren Bearbeitungsschritten und deren zeitliche und logische Bearbeitungsabfolge zur Realisierung einer vorgegebenen Automatisierungsaufgabe,
- Generieren einer Datenstruktur, in der die Simulationskomponenten, die den Bearbeitungsschritten zur Realisierung der vorgegebenen Automatisierungsaufgabe entsprechen, gemäß der zeitlichen und logischen Bearbeitungsabfolge als Elemente in einer Baumstruktur gespeichert und miteinander verknüpft werden,
- Generieren des computergestützten Simulationsmodells durch Umsetzung der Datenstruktur in eine ausführbare Datenstruktur,
   und
- Ausgeben des computergestützte Simulationsmodells für die Automatisierungsanlage.

Das computerimplementierte Verfahren ist insbesondere dafür geeignet, eine Automatisierungsanlage mittels des computergestützten Simulationsmodells zu simulieren und/oder zu steuern.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Auch kann unter einem Prozessor ein virtualisierter Prozessor, eine virtuelle Maschine oder eine Soft-CPU verstanden werden.

Unter "Bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle, wie z. B. eine Datenbankschnittstelle, eine Netzwerkschnittstelle oder eine Schnittstelle zu einer Speichereinheit. Über eine solche Schnittstelle können beispielsweise beim Bereitstellen entsprechende Daten und/oder Informationen übermittelt und/oder gesendet und/oder abgerufen und/oder empfangen werden.

Unter einer "Simulationskomponente" kann im Zusammenhang mit der Erfindung insbesondere ein Teil einer Computersimulation, d.h. ein Programmcode(stück) verstanden werden, welches erlaubt, z.B. einen Bearbeitungsschritt einer Maschine computergestützt zu simulieren. Insbesondere kann es sich bei einer Simulationskomponente um einen Zustandsautomaten handeln. Vorzugsweise sind Simulationskomponenten in einer Simulationskomponentenbibliothek gespeichert und können von dort abgerufen werden. Vorzugsweise sind Simulationskomponenten unabhängige Module/Einheiten, die zusammengesetzt und miteinander verknüpft ein computergestütztes Simulationsmodell, z.B. von der Maschine/von Bearbeitungsschritten der Maschine, ergeben. Unter "Verknüpfen" kann in diesem Zusammenhang beispielsweise verstanden werden, dass Ausgabedaten/Ausgabesignale/Output einer Simulationskomponenten als Eingabedaten/Eingabesignale/Input einer weiteren Simulationskomponente genutzt werden und/oder dass Simulationskomponenten derart angepasst/parametrisiert werden, dass sie miteinander kompatibel sind, z.B. durch Anpassung von Randbedingungen.

Unter einem "Bearbeitungsschritt" kann im Zusammenhang mit der Erfindung insbesondere ein Arbeitsschritt, Prozessschritt oder ein Teil eines Bearbeitungsprogramms (engl. Task) verstanden werden. Ein Bearbeitungsschritt kann beispielsweise durch eine Maschine oder einen Teil der Maschine oder von einem Computer, der Teil einer Maschine sein kann, durchgeführt werden. Eine Menge von zeitlich und logisch geordneten und gekoppelten Bearbeitungsschritten können dabei eine Automatisierungsaufgabe umsetzen.

Unter einer "Automatisierungsaufgabe" (engl. "task") kann beispielsweise ein Vorgang oder ein Prozess, ein Bearbeitungsprozess, ein Auftrag oder eine Anweisung verstanden werden, der zumindest teilweise von einer Maschine der Automatisierungsanlage durchgeführt wird. Beispielsweise kann eine Automatisierungsaufgabe eine Bearbeitung oder ein Transport eines Werkstücks oder eines Produkts sein. Eine solche Bearbeitung kann beispielsweise von mehr als einer Maschine durchgeführt werden, um die Automatisierungsaufgabe umzusetzen. Eine Maschine kann auch eine Vielzahl von verschiedenen Bearbeitungsschritten umsetzen.

Zur Realisierung einer Automatisierungsaufgabe werden insbesondere nur vorgegebene Bearbeitungsschritte genutzt. Eine Automatisierungsaufgabe kann sich somit aus Bearbeitungsschritten in einer vorgegebenen Bearbeitungsreihenfolge und mit vorgegebenen, wechselseitigen Abhängigkeiten zusammensetzen. Unter einer "wechselseitigen Abhängigkeit" kann insbesondere eine Rückkopplung (engl. Feedback) und/oder eine bedingte Anweisung (z.B., "if-else"-Anweisung) verstanden werden, die einen Bearbeitungsschritt mit einem weiteren Bearbeitungsschritt logisch verknüpft. Insbesondere können die Bearbeitungsschritte einer oder mehrerer Maschinen und deren Bearbeitungsreihenfolge und wechselseitigen Abhängigkeiten, d.h. deren zeitliche und logische Reihenfolge/Abfolge, abhängig von der vorgegebenen Automatisierungsaufgabe bereitgestellt werden. In anderen Worten, anhand der Automatisierungsaufgabe können die dafür benötigten Maschinen und/oder die benötigten Bearbeitungsschritte und/oder deren zeitliche und logische Bearbeitungsreihenfolge erfasst werden.

Unter "Erfassen von Bearbeitungsschritten" kann im Zusammenhang mit der Erfindung beispielsweise ein Erfassen von Daten, die die Bearbeitungsschritte beschreiben, verstanden werden. Unter "Erfassen von Bearbeitungsschritten" kann auch ein Einlesen einer Information über die benötigten Bearbeitungsschritte und/oder deren zeitliche und logische Bearbeitungsreihenfolge verstanden werden. Beispielsweise können die Informationen über die Bearbeitungsschritte in einer Datenstruktur gespeichert werden. Es ist auch möglich, dass ein Anwender/Ingenieur die Bearbeitungsschritte erfasst und in computerlesbarem Format bereitstellt.

Unter einer "Datenstruktur" kann im Zusammenhang mit der Erfindung insbesondere eine Datenstruktur, die eine Baumstruktur aufweist, verstanden werden. Die Datenstruktur kann insbesondere ein Behaviour Tree (dt. Verhaltensbaum) sein. Die Datenstruktur kann insbesondere ausführbar übersetzt werden, so dass diese von einem Computer ausführbar ist. Demnach kann es sich bei der ausführbaren Datenstruktur um eine ausführbare Datei (auch Programmdatei) handeln, die als Computerprogramm ausgeführt werden kann, wie z.B. in einer Ausführumgebung oder durch eine Betriebssystem-Shell interpretiert. Die Ausführung der ausführbaren Datenstruktur ermöglicht insbesondere die Bearbeitungsschritte der Automatisierungsaufgabe gemäß ihrer Bearbeitungsabfolge auszuführen, d.h. einen Ablauf der Bearbeitungsschritte beispielsweise abzubilden bzw. zu modellieren.

Die Baumstruktur umfasst Elemente, die Blattelemente/Blattknoten (engl. Leaf nodes) oder Verbindungselemente/Äste (engl. Branches), die die Blattelemente/Blattknoten verknüpfen, sein können. Die Verbindungselemente können insbesondere gerichtet sein. Insbesondere kann anhand der Baumstruktur eine zeitliche und logische Reihenfolge und/oder wechselseitige Abhängigkeit von Bearbeitungsschritten einer Automatisierungsaufgabe abgebildet werden. Dabei können beispielsweise Zustände einer Maschine durch die Blattelemente und das Verhalten durch die Verbindungselemente dargestellt werden. Beispielsweise kann ein erster Bearbeitungsschritt als ein erstes Blattelement gespeichert werden. Ein zweiter Bearbeitungsschritt, der vom ersten Bearbeitungsschritt abhängt und/oder zeitlich nach diesem durchgeführt wird, kann beispielsweise als ein zweites Blattelement, das über ein (gerichtetes) Verbindungselement mit dem ersten Blattelement verbunden ist, abgebildet werden. Derart können eine Vielzahl von voneinander abhängigen Bearbeitungsschritten, die zusammen eine Automatisierungsaufgabe umsetzen, in der Baumstruktur gespeichert werden.

Anhand der Baumstruktur der Datenstruktur können die Simulationskomponenten in der zeitlichen und logischen Reihenfolge, die durch die Baumstruktur vorgegeben ist, miteinander verknüpft werden, um ein computergestütztes Simulationsmodell aus den Simulationskomponenten zu erstellen, mit welchem Automatisierungsaufgabe abgebildet und/oder computergestützt simuliert werden kann.

Unter einer "computergestützten Simulation/Computersimulation" kann im Zusammenhang mit der Erfindung insbesondere eine Simulation verstanden werden, mit der physikalische Prozesse und Verhalten der Automatisierungsanlage abgebildet bzw. nachgebildet werden kann.

Unter "Generieren eines computergestützten Simulationsmodells" kann im Zusammenhang mit der Erfindung insbesondere das Erstellen eines ausführbaren Simulationsmodells verstanden werden. Das computergestützte Simulationsmodell wird aus den selektierten und in der Datenstruktur gespeicherten Simulationskomponenten erstellt. Das generierte computergestützte Simulationsmodell kann beispielsweise zur Steuerung, Planung, Wartung und/oder für eine virtuelle Inbetriebnahme der Automatisierungsanlage ausgegeben werden.

Vorteile der vorliegenden Erfindung liegen in einer Reduktion des manuellen Aufwandes bei der Erstellung eines Simulationsmodells, da die Simulationsmodellgenerierung automatisch durchgeführt werden kann. Dies ermöglicht auch eine gleichbleibende Qualität der computergestützten Simulationsmodelle. Das vorgeschlagene Verfahren mittels einer Datenstruktur mit interner Baumstruktur, z.B. einem Behaviour Tree, ermöglicht insbesondere eine vereinfachte Modellgenerierung. Diese beruht dabei auf einem modularen Ansatz, d.h. das computergestützte Simulationsmodul kann modular aufgebaut werden.

Außerdem lassen sich komplexe Verfahren oder Automatisierungsaufgaben durch die Komposition der einzelnen Bearbeitungsschritte zerlegen und damit einfacher beschreiben.

In einer vorteilhaften Ausführungsform des Verfahrens können die Simulationskomponenten jeweils Zustandsautomaten sein, wobei ein Zustandsautomat mindestens einen Maschinenanfangszustand, mindestens einen Maschinenzielzustand und mindestens einen Zustandsübergang umfasst.

Ein Zustandsautomat, auch als endlicher Automat bezeichnet, kann ein Modell eines Verhaltens, z.B. eines Bearbeitungsschritts einer oder mehrerer Maschinen, bestehend aus Zuständen, Zustandsübergängen und Aktionen. Eine Aktion ist als Ausgabe bzw. Eingabe zu verstehen, d.h. eine Aktion beim Eintreten bzw. Verlassen eines Zustands, d.h. Maschinenanfangszustand und Maschinenzielzustand. Insbesondere können dabei auch Maschinenzustände von mehr als einer Maschine verstanden werden.

In einer weiteren Ausführungsform des Verfahrens kann ein Zustandsautomat mindestens einen weiteren Maschinenzustand, insbesondere einen Fehlerzustand, umfassen.

So kann beispielsweise auch ein Fehlerzustand modelliert werden. Vorzugsweise ist ein Fehlerzustand mit einem Normalzustand über eine Bedingung verknüpft.

In einer weiteren Ausführungsform des Verfahrens kann eine Übergangszeit für den Zustandsübergang definiert und in der Datenstruktur gespeichert werden.

Somit kann in der Datenstruktur auch eine Zeitdauer eines Bearbeitungsschritts modelliert werden.

In einer weiteren Ausführungsform des Verfahrens kann eine Eintrittswahrscheinlichkeit für einen Maschinenzielzustand und/oder einen Maschinenzustand definiert und in der Datenstruktur gespeichert werden.

Beispielsweise kann hier eine mittlere Betriebsdauer zwischen Ausfällen (engl. Mean Time Between Failures; MTBF) genutzt werden. Dadurch kann insbesondere ein realistisches Verhalten der Maschine abgebildet werden.

In einer bevorzugten Ausführungsform des Verfahrens kann die Datenstruktur ein Behaviour Tree sein.

Ein Behaviour Tree (dt. ein Verhaltensbaum) ist ein endlicher Automat, der insbesondere auch eine parallele Ausführung von Bearbeitungsschritten erlaubt. Ein Behaviour Tree erlaubt außerdem eine bessere Modularität der gespeicherten Bearbeitungsschritte.

In einer weiteren Ausführungsform des Verfahrens kann ein Eingangssignal für einen Maschineanfangszustand definiert werden.

Insbesondere kann für die Ausführung der Datenstruktur ein Eingangssignal als Startbedingung eingelesen werden. Dies ermöglicht, die Datenstruktur an reale Maschinenzustände anzupassen.

In einer weiteren Ausführungsform des Verfahrens kann die Automatisierungsaufgabe mittels des computergestützten Simulationsmodells simuliert werden.

Damit kann die Automatisierungsanlage beispielsweise virtuell in Betrieb genommen werden.

In einer weiteren Ausführungsform des Verfahrens kann die Automatisierungsanlage auf Basis der computergestützten Simulation der Automatisierungsaufgabe gesteuert werden.

Insbesondere kann die computergestützte Simulation Ein- und/oder Ausgangssignale liefern, die für die Steuerung der Automatisierungsanlage genutzt werden können, um die Automatisierungsaufgabe durch die Automatisierungsanlage umzusetzen.

In einer weiteren Ausführungsform des Verfahrens kann die ausführbare Datenstruktur ausgeführt werden, wobei die Bearbeitungsabfolge der Bearbeitungsschritte in Echtzeit ausgegeben und dargestellt werden.

Beispielsweise kann ein grafische Benutzeroberfläche (Graphical User Interface; GUI) genutzt werden, um die Ausführung der Datenstruktur grafisch in Echtzeit darzustellen. Beispielsweise können dabei die durchgeführten Bearbeitungsschritte grafisch dargestellt werden. Dies ermöglicht einen Überblick über die Bearbeitungsschritte der Automatisierungsanlage für den Anwender.

Gemäß einem zweiten Aspekt betrifft die Erfindung eine Vorrichtung zum Generieren eines computergestützten Simulationsmodells für eine Automatisierungsanlage, umfassend:
a) eine Eingabeeinheit, die derart eingerichtet ist
   - Simulationskomponenten einzulesen, wobei die Simulationskomponenten jeweils dazu eingerichtet sind, Bearbeitungsschritte, die von mindestens einer Maschine der Automatisierungsanlage ausführbar sind, computergestützt zu simulieren, und
   - jeweilige, von mindestens einer Maschine der Automatisierungsanlage umsetzbare Bearbeitungsschritte und deren zeitliche und logische Bearbeitungsabfolge zur Realisierung einer vorgegebenen Automatisierungsaufgabe zu erfassen,
b) einen Datenstrukturgenerator, der derart eingerichtet ist, eine Datenstruktur zu generieren, in der Simulationskomponenten, die den Bearbeitungsschritten zur Realisierung der vorgegebenen Automatisierungsaufgabe entsprechen, gemäß der zeitlichen und logischen Bearbeitungsabfolge als Elemente in einer Baumstruktur gespeichert und miteinander verknüpft werden,
c) ein Simulationsmodellgenerator, der derart eingerichtet ist, das computergestützte Simulationsmodell durch Umsetzung der Datenstruktur in eine ausführbare Datenstruktur zu generieren und
d) eine Ausgabeeinheit, die derart eingerichtet ist, das computergestützte Simulationsmodell für die Automatisierungsanlage auszugeben.

Die Vorrichtung kann insbesondere in Software und/oder Hardware ausgestaltet sein. Insbesondere kann die Vorrichtung mindestens einen Prozessor umfassen.

In einer Ausführungsform kann die Vorrichtung weiter eine Simulationsumgebung umfassen, wobei die Simulationsumgebung derart eingerichtet ist, die Automatisierungsaufgabe mittels des computergestützten Simulationsmodells zu simulieren.

In einer Ausführungsform kann die Vorrichtung weiter eine Steuerungseinheit umfassen, wobei die Steuerungseinheit derart eingerichtet ist, die Automatisierungsanlage auf Basis der computergestützten Simulation der Automatisierungsaufgabe zu steuern.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein erstes Ausführungsbeispiel des erfindungsgemäßen Verfahrens;
- Fig. 2:: ein zweites Ausführungsbeispiel des erfindungsgemäßen Verfahrens;
- Fig. 3:: ein erstes Ausführungsbeispiel der erfindungsgemäßen Vorrichtung; und
- Fig. 4:: ein zweites Ausführungsbeispiel der erfindungsgemäßen Vorrichtung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

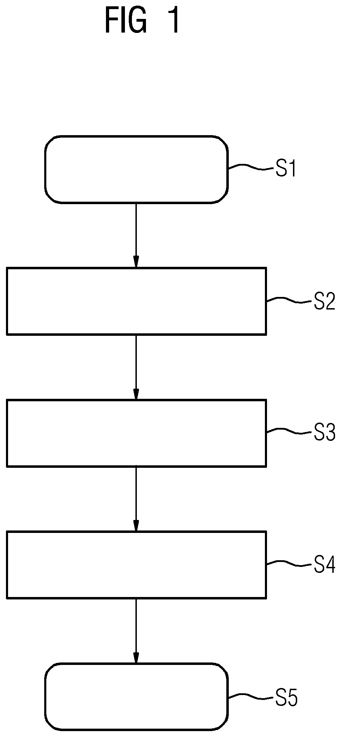

Figur 1 zeigt ein Flussdiagramm einer Ausführungsform des erfindungsgemäßen Verfahrens zum Generieren eines computergestützten Simulationsmodells für eine Automatisierungsanlage, wie z.B. eine Fabrikanlage.

Die Automatisierungsanlage umfasst beispielsweise eine Vielzahl von Maschinen und/oder Geräte, wie z.B. Werkzeugmaschinen oder Roboter. Die Maschinen sind derart eingerichtet, dass sie jeweils mindestens eine Aufgabe bzw. einen Bearbeitungsschritt durchführen können.

Die Automatisierungsanlage kann mindestens eine Automatisierungsaufgabe durchführen, wobei die Automatisierungsaufgabe mindestens einen Bearbeitungsschritt umfasst. Die Automatisierungsaufgabe wird durch mindestens eine Maschine durchgeführt.

Beispielsweise kann die Automatisierungsaufgabe eine Fertigung eines Bauteils sein, wobei die Fertigung beispielsweise eine Vielzahl von Bearbeitungsschritten umfasst, wie z.B. Schneiden, Fräßen, Kleben, Drehen, Transportieren, etc. Die Bearbeitungsschritte können insbesondere voneinander abhängig sein, d.h. zur Realisierung einer Automatisierungsaufgabe kann eine bestimmte Reihenfolge der Bearbeitungsschritte nötig sein. Die Automatisierungsaufgabe ist beispielsweise vorgegeben und kann, z.B. als Datenstruktur oder Datensatz, zunächst eingelesen werden.

Im ersten Schritt S1 des Verfahrens werden Simulationskomponenten eingelesen, die jeweils dazu eingerichtet sind, Bearbeitungsschritte, die von mindestens einer Maschine der Automatisierungsanlage ausführbar sind, computergestützt zu simulieren. Insbesondere kann ein Bearbeitungsschritt, der durch eine Maschine der Automatisierungsanlage umgesetzt werden kann, durch eine Simulationskomponente modelliert werden. Vorzugsweise werden die Simulationskomponenten in einer Datenbank, z.B. einer Simulationsbibliothek, bereitgestellt und von dort eingelesen. Die Simulationskomponenten sind vorzugsweise Zustandsautomaten.

Im nächsten Schritt S2 werden jeweilige Bearbeitungsschritte, die für die Realisierung der Automatisierungsaufgabe benötigt werden, erfasst. Beispielsweise wird geprüft, welche Bearbeitungsschritte für die Umsetzung der Automatisierungsaufgabe benötigt werden. Außerdem wird deren zeitliche und logische Reihenfolge erfasst. Vorzugsweise wird dabei auch eine Information zu einer jeweiligen Maschine, die den jeweiligen Bearbeitungsschritt durchführen kann, erfasst. Außerdem werden Signale angelegt, die die Schritte triggern können bzw. Feedback über die Zustände geben. Dies kann beispielsweise durch einen Anwender durchgeführt werden, der die Bearbeitungsschritte bzw. eine Information zu den Bearbeitungsschritten und deren Reihenfolge und Abhängigkeiten erfasst und in einer computerlesbaren Form bereitstellt. Alternativ kann auch ein Datensatz, z.B. eine Liste, der für die Automatisierungsaufgabe benötigten Bearbeitungsschritte eingelesen werden.

Anhand der benötigten Bearbeitungsschritte zur Realisierung der vorgegebenen Automatisierungsaufgabe können entsprechende Simulationskomponenten aus der Menge an eingelesenen Simulationskomponenten selektiert werden, die dazu geeignet sind, diese erfassten Bearbeitungsschritte zu simulieren.

Im nächsten Schritt S3 wird eine Datenstruktur, z.B. ein Behaviour Tree, generiert. Beispielsweise wird der Behaviour Tree durch einen Nutzer aufgebaut. Dies kann beispielsweise mittels einer grafischen Darstellung der einzelnen Bearbeitungsschritte unterstützt werden. Damit kann beispielsweise ein Nutzer lediglich die grafische Repräsentation der Bearbeitungsschritte zeitlich und logisch miteinander verknüpfen und derart die Baumstruktur aufbauen. Diese kann dann in einer Datenstruktur übernommen werden.

In der Datenstruktur werden die selektierten Simulationskomponenten, die den Bearbeitungsschritten zur Realisierung der vorgegebenen Automatisierungsaufgabe entsprechen, gemäß der zeitlichen und logischen Bearbeitungsabfolge als Elemente in einer Baumstruktur gespeichert und miteinander verknüpft.

Die Datenstruktur hat eine Baumstruktur, wobei in deren Blattknoten die Simulationskomponenten und in den Verbindungselementen deren zeitliche und logische Reihenfolge und/oder Abhängigkeiten gespeichert werden. Die Datenstruktur bildet somit die zeitliche und logische Reihenfolge der Bearbeitungsschritte ab, die für die Durchführung der Automatisierungsaufgabe benötigt werden.

Im nächsten Schritt S4 wird aus der Datenstruktur eine ausführbare Datenstruktur umgesetzt und damit ein computergestütztes Simulationsmodell generiert.

Im nächsten Schritt S5 wird das generierte computergestützte Simulationsmodells ausgegeben. Das computergestützte Simulationsmodell kann beispielsweise in einer Simulationsumgebung ausgeführt werden, so dass die Automatisierungsaufgabe der Automatisierungsanlage computergestützt simuliert werden kann. Dies erleichtert beispielsweise eine virtuelle Inbetriebnahme der Automatisierungsanlage. Zusätzlich kann die Automatisierungsanlage auf Basis dieser computergestützten Simulation gesteuert werden. Demnach ist das Verfahren auch zur Simulation und/oder Steuerung der Automatisierungsanlage bzw. der Automatisierungsaufgabe der Automatisierungsanlage geeignet.

Vorzugweise kann eine Vielzahl von Automatisierungsaufgaben, die die Automatisierungsanlage sequentiell und/oder parallel durchführen kann mittels der Datenstruktur in strukturierter Form bereitgestellt werden, so dass damit ein computergestütztes Simulationsmodell für die Automatisierungsanlage generiert werden kann. So kann modular ein komplexes Verhalten einer Automatisierungsanlage simuliert werden.

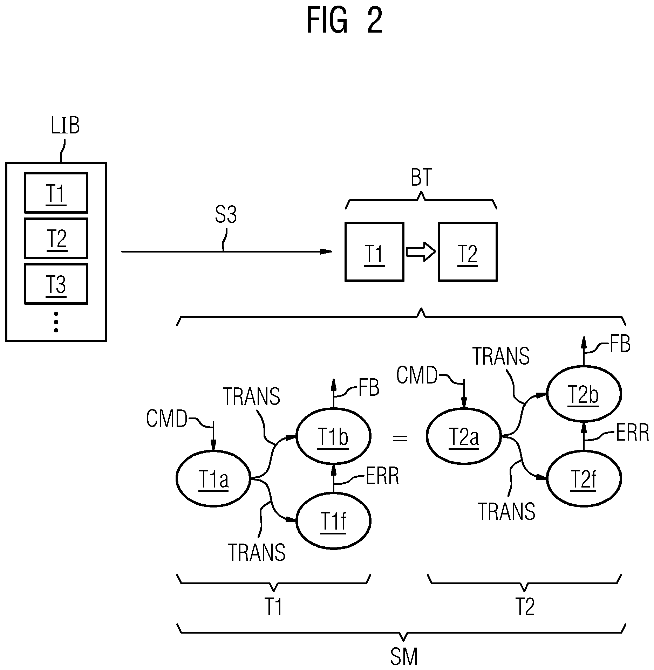

Figur 2 zeigt ein weiteres Ausführungsbeispiel des erfindungsgemäßen Verfahrens zur Generierung eines computergestützten Simulationsmodells zur Simulation und/oder Steuerung einer durch eine Automatisierungsanlage ausführbaren Automatisierungsaufgabe.

Es ist eine Datenbank oder Bibliothek LIB von gespeicherten, grafischen Repräsentanten der Bearbeitungsschritte T1, T2, T3, ... gezeigt, die zur Realisierung einer vorgegebenen Automatisierungsaufgabe durch die Maschinen der Automatisierungsanlage benötigt werden.

Aus den in der Bibliothek LIB gespeicherten Bearbeitungsschritten T1, T2, T3, ... werden diejenigen Bearbeitungsschritte selektiert, die zur Umsetzung der Automatisierungsaufgabe benötigt werden. Zusätzlich wird die zeitliche und/oder logische Reihenfolge und die Abhängigkeiten der Bearbeitungsschritte zur Realisierung der Automatisierungsaufgabe bestimmt und bereitgestellt. Für die selektierten Bearbeitungsschritte T1, T2, T3, ... werden entsprechende Simulationskomponenten bereitgestellt.

Gemäß der Reihenfolge und wechselseitigen Abhängigkeiten der Bearbeitungsschritte zur Realisierung der vorgegebenen Automatisierungsaufgabe wird eine Datenstruktur BT, z.B. ein Behaviour Tree BT, erstellt, wie beispielhaft mit Schritt S3 in Figur 1 gezeigt. Die Datenstruktur BT hat vorzugsweise eine Baumstruktur, in der Simulationskomponenten in der zeitlichen und logischen Reihenfolge der Bearbeitungsschritte, insbesondere auch parallele Bearbeitungsschritte, gespeichert und verknüpft werden.

Die Simulationskomponenten können insbesondere als Zustandsautomaten ausgestaltet sein. Der Behaviour Tree BT umfasst somit Zustandsautomaten, die mindestens einen Maschinenanfangszustand T1a, T2a, mindestens einen Maschinenzielzustand T1b, T2b und mindestens einen Zustandsübergang TRANS, ERR umfassen. Des Weiteren kann ein jeweiliger Zustandsautomat einen Fehlerzustand T1f, T2f umfassen. Für einen Zustandsübergang TRANS, ERR kann eine Übergangszeit definiert und im Behaviour Tree BT gespeichert sein, die festlegt, wann ein Übergang von einem Zustand in den anderen erfolgt. Für einen Zustandsautomaten kann ein Eingangssignal CMD für den Maschinenanfangszustand T1a definiert bzw. festgelegt werden. Außerdem kann für einen Maschinenausgangszustand ein Ausgangssignal FB erfasst und ausgelesen werden. Die einzelnen Simulationskomponenten T1, T2 werden über ihr Ausgangssignal T1b und Eingangssignal T2a miteinander verknüpft.

Die Eingangs- und Ausgangssignale können beispielsweise vordefiniert sein. Außerdem können die Ausgangssignale an ein Automatisierungssystem (z.B. OPC UA, PROFIBUS) gekoppelt werden.

Die Simulationskomponenten sind vorzugsweise jeweils dazu eingerichtet, einzelne Bearbeitungsschritte, die von mindestens einer Maschine der Automatisierungsanlage ausführbar sind, computergestützt zu simulieren. Anhand der Verknüpfung der Simulationskomponenten auf Basis der Baumstruktur des Behaviour Trees kann modular ein computergestütztes Simulationsmodell SM erstellt werden.

Aus der Datenstruktur BT wird mittels eines Compilers eine ausführbare Datenstruktur und somit das computergestützte Simulationsmodell SM generiert. Dieses kann beispielsweise zur computergestützten Simulation der Automatisierungsaufgabe der Automatisierungsanlage bzw. zur virtuellen Inbetriebnahme der Automatisierungsanlage und/oder zur Steuerung der Automatisierungsanlage genutzt werden.

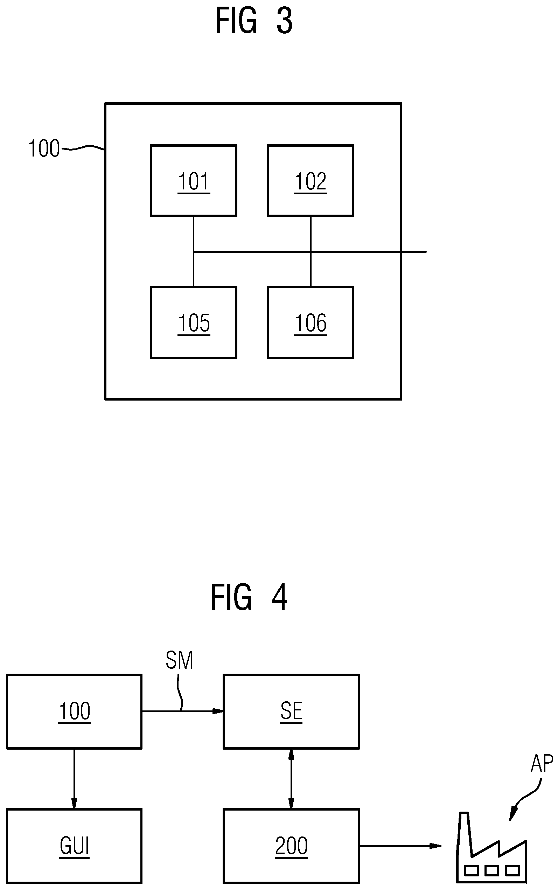

Figur 3 zeigt ein Ausführungsbeispiel der erfindungsgemäßen Vorrichtung 100 zum Generieren eines computergestützten Simulationsmodells für eine Automatisierungsanlage in Blockdarstellung. Mit dem computergestützten Simulationsmodell kann mindestens eine von der Automatisierungsanlage durchgeführte Automatisierungsaufgabe simuliert werden. Auf Basis der computergestützten Simulation kann die Automatisierungsanlage gesteuert werden.

Die Vorrichtung umfasst eine Eingabeeinheit 101, z.B. eine Schnittstelle zu einer Datenbank, in der eine Vielzahl von Simulationskomponenten zur Generierung des computergestützten Simulationsmodells gespeichert sind. Die Simulationskomponenten sind derart eingerichtet, einzelne Bearbeitungsschritte, die von mindestens einer Maschine der Automatisierungsanlage ausführbar sind, computergestützt zu simulieren. Die Simulationskomponenten sind vorzugsweise als Zustandsautomaten ausgestaltet. Über die Eingabeeinheit können Simulationskomponenten eingelesen werden.

Außerdem ist die Eingabeeinheit 101 dazu eingerichtet, eine Information zu einer vorgegebenen Automatisierungsaufgabe einzulesen.

Des Weiteren ist die Eingabeeinheit 101 dazu eingerichtet, einzelne, von mindestens einer Maschine der Automatisierungsanlage umsetzbare Bearbeitungsschritte und deren zeitliche und logische Bearbeitungsabfolge zur Realisierung der Automatisierungsaufgabe zu erfassen. Beispielsweise werden die Bearbeitungsschritte durch einen Nutzer der Vorrichtung erfasst und in computerlesbarer Form mittels der Eingabeeinheit 101 eingelesen.

Die Vorrichtung 100 umfasst weiter einen Datenstrukturgenerator 102, der derart eingerichtet ist, eine Datenstruktur, wie z.B. einen Behaviour Tree, zu generieren. In der Datenstruktur können selektierte Simulationskomponenten, die den Bearbeitungsschritten zur Realisierung der vorgegebenen Automatisierungsaufgabe entsprechen, gemäß der zeitlichen und logischen Bearbeitungsabfolge der Bearbeitungsschritte als Elemente in einer Baumstruktur gespeichert und miteinander verknüpft werden. Der Datenstrukturgenerator 102 kann beispielsweise als ein Engineering-Tool zur Erstellung eines Behaviour Trees verstanden werden.

Die Vorrichtung 100 umfasst weiter einen Simulationsmodellgenerator 103, der derart eingerichtet ist, das computergestützte Simulationsmodell zu generieren, wobei die Datenstruktur in eine ausführbare Datenstruktur umgewandelt wird.

Das computergestützte Simulationsmodell ist insbesondere dazu ausgebildet, die Automatisierungsaufgabe zu simulieren.

Außerdem umfasst die Vorrichtung 100 eine Ausgabeeinheit 105, die derart eingerichtet ist, das computergestützte Simulationsmodell für die Automatisierungsanlage auszugeben.

Die Vorrichtung 100 kann weiter eine Simulationsumgebung umfassen oder alternativ mit dieser gekoppelt sein. Die Simulationsumgebung ist derart eingerichtet, die Automatisierungsaufgabe mittels des computergestützten Simulationsmodells zu simulieren.

Die Vorrichtung 100 kann außerdem eine Steuerungseinheit umfassen oder mit dieser gekoppelt sein, die derart eingerichtet ist, die Automatisierungsanlage auf Basis der computergestützten Simulation der Automatisierungsaufgabe zu steuern, d.h. die Automatisierungsanlage so zu steuern, dass sie die Automatisierungsaufgabe ausführt.

Figur 4 zeigt ein weiteres Ausführungsbeispiel der erfindungsgemäßen Vorrichtung 100.

Für eine virtuelle Inbetriebnahme einer Automatisierungsanlage AP kann ein weniger detailliertes, computergestütztes Modell ausreichen, da die Hauptinteraktion für die Validierung im Austausch von Signalen zwischen Automatisierung und Prozess liegt. Daher können Zustandsmaschinen ausreichen, um die verschiedenen, möglicherweise diskreten Zustände und Transformationen zu beschreiben, die der Realisierung einer Automatisierungsaufgabe zu Grunde liegen. Jeder Zustand löst eine Systemreaktion aus, da jede Transformation durch ein Signal aus der Automatisierung ausgelöst werden kann. Diese Idee wird mittels der Vorrichtung 100 auf den Ansatz der Behaviour Trees übertragen. Durch das Generieren eines Behaviour Trees wird ein komplexer Zustandsautomat generiert.

Die Vorrichtung 100 ist dazu eingerichtet, einen Behaviour Tree und daraus ein computergestütztes Simulationsmodell zu erstellen, wie anhand Fig. 1 und 2 gezeigt. Des Weiteren umfasst die Vorrichtung 100 einen Compiler, der den Behaviour Tree in einen ausführbaren Behaviour Tree übersetzt.

Der Behaviour Tree kann ausgeführt werden und damit beispielsweise zum Testen von sequentiellen Funktionsdiagrammen auf Basis des Standards IEC 61131 genutzt werden.

Das computergestützte Simulationsmodell SM kann an eine Simulationsumgebung SE übermittelt werden. Die Simulationsumgebung SE kann als Teil der Vorrichtung 100 oder unabhängig von dieser realisiert sein. In der Simulationsumgebung SE kann beispielsweise eine computergestützte Simulation der Automatisierungsaufgabe durchgeführt werden.

Die Vorrichtung 100 kann außerdem mit einer grafischen Benutzerschnittstelle GUI gekoppelt sein, die bei Ausführung des ausführbaren Behaviour Trees die Bearbeitungsabfolge der Bearbeitungsschritte in Echtzeit ausgeben und darstellen kann.

Die Vorrichtung 100 kann weiter mit einer Steuerungseinheit 200 gekoppelt sein, die dazu eingerichtet ist, auf Basis der computergestützten Simulation die Automatisierungsanlage AP zu steuern, so dass die Automatisierungsaufgabe durch die Automatisierungsanlage ausgeführt wird.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Generieren eines computergestützten Simulationsmodells für eine Automatisierungsanlage, mit den Verfahrensschritten:
- Einlesen (S1) von Simulationskomponenten, die jeweils dazu eingerichtet sind, Bearbeitungsschritte, die von mindestens einer Maschine der Automatisierungsanlage ausführbar sind, computergestützt zu simulieren,
- Erfassen (S2) von jeweiligen, von mindestens einer Maschine der Automatisierungsanlage umsetzbaren Bearbeitungsschritten und deren zeitliche und logische Bearbeitungsabfolge zur Realisierung einer vorgegebenen Automatisierungsaufgabe,
- Generieren (S3) einer Datenstruktur (BT), in der die Simulationskomponenten, die den Bearbeitungsschritten zur Realisierung der vorgegebenen Automatisierungsaufgabe entsprechen, gemäß der zeitlichen und logischen Bearbeitungsabfolge als Elemente in einer Baumstruktur gespeichert und miteinander verknüpft werden,
- Generieren (S4) des computergestützten Simulationsmodells (SM) durch Umsetzung der Datenstruktur (BT) in eine ausführbare Datenstruktur,
und
- Ausgeben (S5) des computergestützte Simulationsmodells (SM) für die Automatisierungsanlage.

2. Computerimplementiertes Verfahren nach Anspruch 1, wobei die Simulationskomponenten jeweils Zustandsautomaten sind, wobei ein Zustandsautomat mindestens einen Maschinenanfangszustand (T1a, T2a), mindestens einen Maschinenzielzustand (T1b, T2b) und mindestens einen Zustandsübergang (TRANS) umfasst.

3. Computerimplementiertes Verfahren nach Anspruch 2, wobei ein Zustandsautomat mindestens einen weiteren Maschinenzustand, insbesondere einen Fehlerzustand, umfasst.

4. Computerimplementiertes Verfahren nach Anspruch 3, wobei eine Übergangszeit für den Zustandsübergang definiert und in der Datenstruktur gespeichert wird.

5. Computerimplementiertes Verfahren nach Anspruch 2 oder 3, wobei eine Eintrittswahrscheinlichkeit für einen Maschinenzielzustand und/oder einen Maschinenzustand definiert und in der Datenstruktur gespeichert wird.

6. Computerimplementiertes Verfahren nach einem der vorhergehenden Ansprüche, wobei die Datenstruktur ein Behaviour Tree ist.

7. Computerimplementiertes Verfahren nach einem der vorhergehenden Ansprüche, wobei ein Eingangssignal für einen Maschineanfangszustand definiert wird.

8. Computerimplementiertes Verfahren nach einem der vorhergehenden Ansprüche, wobei die Automatisierungsaufgabe mittels des computergestützten Simulationsmodells computergestützt simuliert wird.

9. Computerimplementiertes Verfahren nach Anspruch 8, wobei die Automatisierungsanlage auf Basis der computergestützten Simulation der Automatisierungsaufgabe gesteuert wird.

10. Computerimplementiertes Verfahren nach einem der vorhergehenden Ansprüche, wobei die ausführbare Datenstruktur ausgeführt wird, wobei die Bearbeitungsabfolge der Bearbeitungsschritte in Echtzeit ausgegeben und dargestellt wird.

11. Vorrichtung (100) zum Generieren eines computergestützten Simulationsmodells für eine Automatisierungsanlage, umfassend:
a. eine Eingabeeinheit (101), die derart eingerichtet ist
- Simulationskomponenten einzulesen, wobei die Simulationskomponenten jeweils dazu eingerichtet sind, Bearbeitungsschritte, die von mindestens einer Maschine der Automatisierungsanlage ausführbar sind, computergestützt zu simulieren, und
- jeweilige, von mindestens einer Maschine der Automatisierungsanlage umsetzbare Bearbeitungsschritte und deren zeitliche und logische Bearbeitungsabfolge zur Realisierung einer vorgegebenen Automatisierungsaufgabe zu erfassen,
b. einen Datenstrukturgenerator (102), der derart eingerichtet ist, eine Datenstruktur (BT) zu generieren, in der die Simulationskomponenten, die den Bearbeitungsschritten zur Realisierung der vorgegebenen Automatisierungsaufgabe entsprechen, gemäß der zeitlichen und logischen Bearbeitungsabfolge als Elemente in einer Baumstruktur gespeichert und miteinander verknüpft werden,
c. ein Simulationsmodellgenerator (103), der derart eingerichtet ist, das computergestützte Simulationsmodell (SM) durch Umsetzung der Datenstruktur (BT) in eine ausführbare Datenstruktur zu generieren,
und
d. eine Ausgabeeinheit (104), die derart eingerichtet ist, das computergestützte Simulationsmodell (SM) für die Automatisierungsanlage auszugeben.

12. Vorrichtung nach Anspruch 11, weiter umfassend eine Simulationsumgebung, die derart eingerichtet ist, die Automatisierungsaufgabe mittels des computergestützten Simulationsmodells zu simulieren.

13. Vorrichtung nach Anspruch 12, weiter umfassend eine Steuerungseinheit (200), die derart eingerichtet ist, die Automatisierungsanlage auf Basis der computergestützten Simulation der Automatisierungsaufgabe zu steuern.

14. Computerprogrammprodukt, das direkt in einen programmierbaren Computer ladbar ist, umfassend Programmcodeteile, die dazu geeignet sind, die Schritte des Verfahrens nach einem der Ansprüche 1 bis 10 durchzuführen.
